# EUROPEAN PATENT APPLICATION

(11) **EP 2 996 041 A1**
(43) Date of publication of application: **16.03.2016**
(21) Application number: 15181422.5
(22) Date of filing: 18.08.2015
(51) Int. Cl.: G06F 9/54

(54) **DATA TRIGGERED METHODS AND SYSTEMS FOR OBJECT OPERATION**

(30) Priority: 09.09.2014 TW 103130939
(71) Applicant: Hooloop Corporation, Taipei City 115 (TW)
(72) Inventor: LI, Tsung-Yin, 115 Taipei City (TW); KUAN, Tzu-Han, 115 Taipei City (TW); YU, Doris, 115 Taipei City (TW); WANG, John C., 115 Taipei City (TW)
(74) Representative: Karakatsanis, Georgios

(57) **Abstract**

Data triggered methods and systems for object operation are provided. First, data and a designation for an object are received from a specific electronic device (130) via a network (120). Then, the data is selected. In response to the selection of the data, the designated object is obtained, and a specific operation is performed on the designated object.

## Description

### BACKGROUND

### Technical Field

The disclosure relates generally to methods and systems for object operation, and, more particularly to data triggered methods and systems for object operation.

### Description of the Related Art

Recently, portable devices, such as smart phones or notebooks, have become more and more technically advanced and multifunctional. For example, a portable device may have network connectivity capabilities. Users can use their portable devices to connect to networks anytime and anywhere. Due to increased convenience and expanded functionalities of the devices, these devices have become necessities of life.

As a result of the popularity of applications for network communication in smartphones, communicating with friends online via smartphone applications has become a prevalent interaction method. Generally, users can input a text message or record a voice message, and send the text message or the voice message to a specific friend or members of a group. The specific friend or group members can read the text message or the voice message immediately or at their leisure.

Generally, applications for network communication provide data transmission services. That is data, such as texts, voices, images, and videos can be transmitted between users in its pure format, and the transmitted data can be respectively reviewed. Conventionally, the transmitted data itself cannot be appended with other functions, and no related applications can be provided between the respective data, such as voices and images.

### SUMMARY

Data triggered methods and systems for object operation are provided, wherein a user can generate and transmit data to a specific user, and the data can trigger a designated object in the device of the specific user.

In an embodiment of a data triggered method for object operation, data and a designation for an object are received from a specific electronic device via a network. Then, the data is selected. In response to the selection of the data, the designated object is obtained, and a specific operation is performed on the designated object.

An embodiment of a data triggered system for object operation comprises a network connecting unit and a processing unit. The processing unit receives data and a designation for an object are received from a specific electronic device via a network. The processing unit receives a selection corresponding to the received data. In response to the selection corresponding to the data, the processing unit obtains the designated object, and performs a specific operation on the designated object.

In some embodiments, an image is received via the specific electronic device, wherein the designated object is a specific portion of the image, and the specific portion is magnified and displayed in a display unit when the specific operation is performed.

In some embodiments, the object comprises a text, an image, and/or a sound effect, and the object is displayed or played when the specific operation is performed.

In some embodiments, the object is built in the electronic device, the object comprises a text, an image, and/or a sound effect, and the object is displayed or played when the specific operation is performed.

In some embodiments, the specific electronic device generates the data, and the object is designated during the generation of the data.

In some embodiments, the electronic device executes a network communication application, and the data is received from the specific electronic device via a server providing a network communication service corresponding to the network communication application.

In some embodiments, the data comprises an audio, a text, and/or a video. In some embodiments, the data is played when the data is selected.

Data triggered methods for object operation may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed descriptions with references to the accompanying drawings, wherein:
Fig. 1 is a schematic diagram illustrating an embodiment of a data triggered system for object operation of the invention;
Fig. 2 is a schematic diagram illustrating another embodiment of a data triggered system for object operation of the invention;
Fig. 3 is a schematic diagram illustrating an embodiment of an electronic device of the invention;
Fig. 4 is a flowchart of an embodiment of a data triggered method for object operation of the invention;
Fig. 5 is a flowchart of another embodiment of a data triggered method for object operation of the invention; and
Figs. 6A and 6B are schematic diagrams illustrating an example of data-triggered object operation of the invention.

### DETAILED DESCRIPTION OF THE INVENTION

Data triggered methods and systems for object operation are provided.

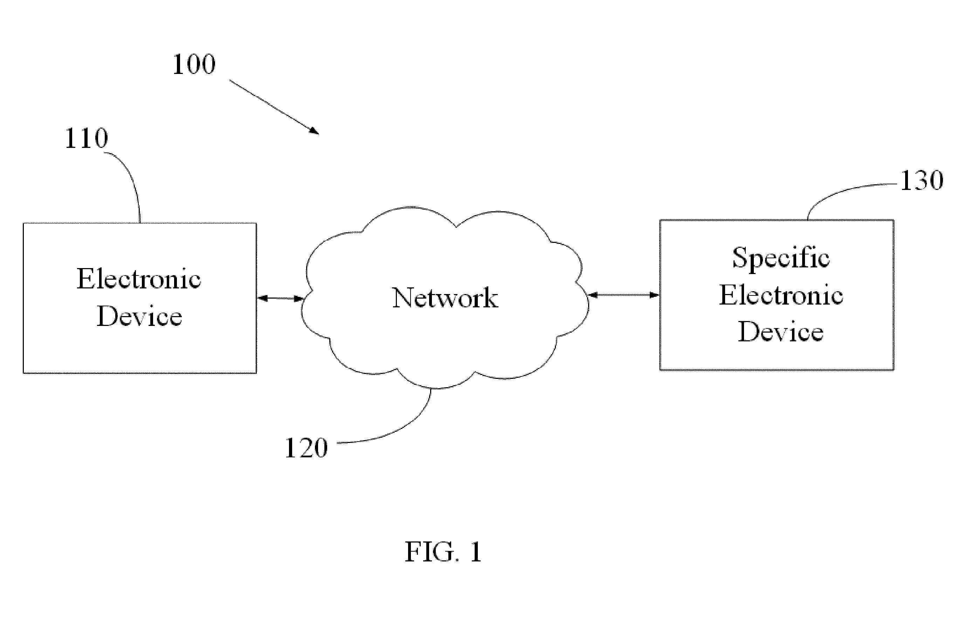

Fig. 1 is a schematic diagram illustrating an embodiment of a data triggered system for object operation of the invention. As shown in Fig. 1, the data triggered system for object operation 100 can comprise an electronic device 110 and at least one other specific electronic device 130. The electronic device 110 and the other specific electronic device 130 may be any electronic device having network connectivity capabilities, such as a computer, or a portable device, such as a mobile phone, a smart phone, a PDA (Personal Digital Assistant), a GPS (Global Positioning System), or a notebook. In some embodiments, the electronic device 110 and the other specific electronic device 130 can connect and communicate with each other via a network 120, such as a wired network, a telecommunication network, and/or a wireless network such as Bluetooth or Wi-Fi network.

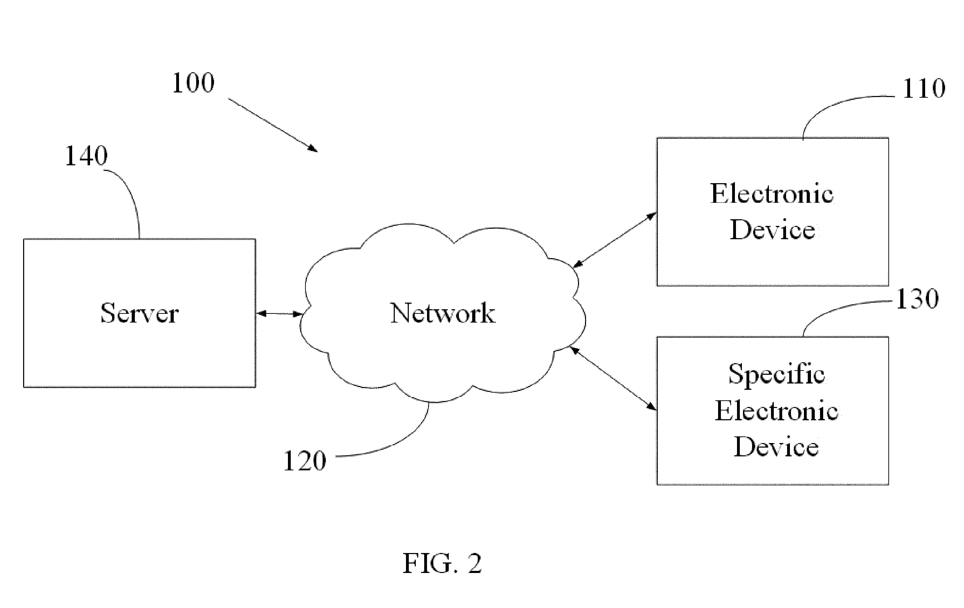

Fig. 2 is a schematic diagram illustrating another embodiment of a data triggered system for object operation of the invention. As shown in Fig. 2, the data triggered system for object operation 100 can comprise an electronic device 110, at least one other specific electronic device 130, and a server 140. The electronic device 110 and the other specific electronic device 130 may be any electronic device having network connectivity capabilities, such as a computer, or a portable device, such as a mobile phone, a smart phone, a PDA, a GPS, or a notebook. In some embodiments, the electronic device 110 and the specific electronic device 130 can connect to the server 140 via a network 120, such as a wired network, a telecommunication network, and/or a wireless network such as Bluetooth or Wi-Fi network. The server 140 provides a service corresponding to at least one application, and the respective user device can install the application. In some embodiments, the application is a network communication application. Users can communicate with each other via the server 140 by using their user devices.

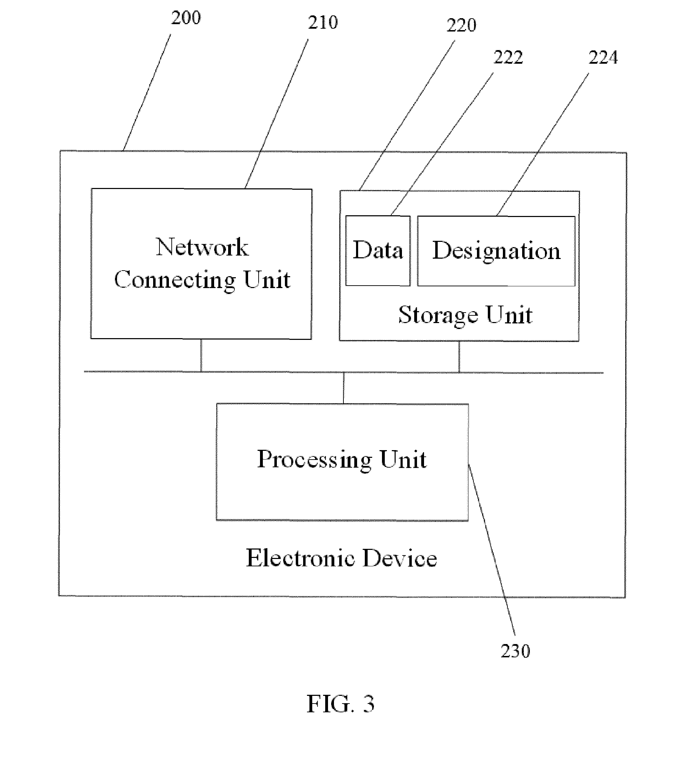

Fig. 3 is a schematic diagram illustrating an embodiment of an electronic device of the invention. As shown in Fig. 3, the electronic device 200 comprises a network connecting unit 210, a storage unit 220, and a processing unit 230. The network connecting unit 210 can connect to a network, such as a wired network, a telecommunication network, and/or a wireless network such as Bluetooth or Wi-Fi network. The electronic device 200 can have network connectivity capabilities by using the network connecting unit 210. The storage unit 220 comprises data 222. It is noted that, the data 222 can be received from a specific electronic device via a network. It is understood that, in some embodiments, the data 222 may be an audio clip, a text, and/or a video. The storage unit 220 further comprises a designation 224 corresponding to an object. That is at least one specific object can be designated to the data 222. It is understood that, in some embodiments, the specific object can be received from a specific electronic device via a network. In some embodiments, the specific object can be received from a server via a network. In some embodiments, the specific object can be built in the electronic device 200. It is noted that, in some embodiments, the object comprises a text, an image, and/or a sound effect. It is understood that, in some embodiments, the specific electronic device can generate the data 222, and the object is designated during the generation of the data 222. It is noted that, the above data and object are only examples of the invention, and the present invention is not limited thereto. The processing unit 230 can control related operations of hardware and software in the electronic device, and perform the data triggered method for object operation of the present invention, which will be discussed later.

It is understood that, in some embodiments, the electronic device 200 can comprise a display unit (not shown in Fig. 3), which can display related information, such as images, interfaces, and/or data. In some embodiments, the display unit can display a representative icon corresponding to the data in a user interface.

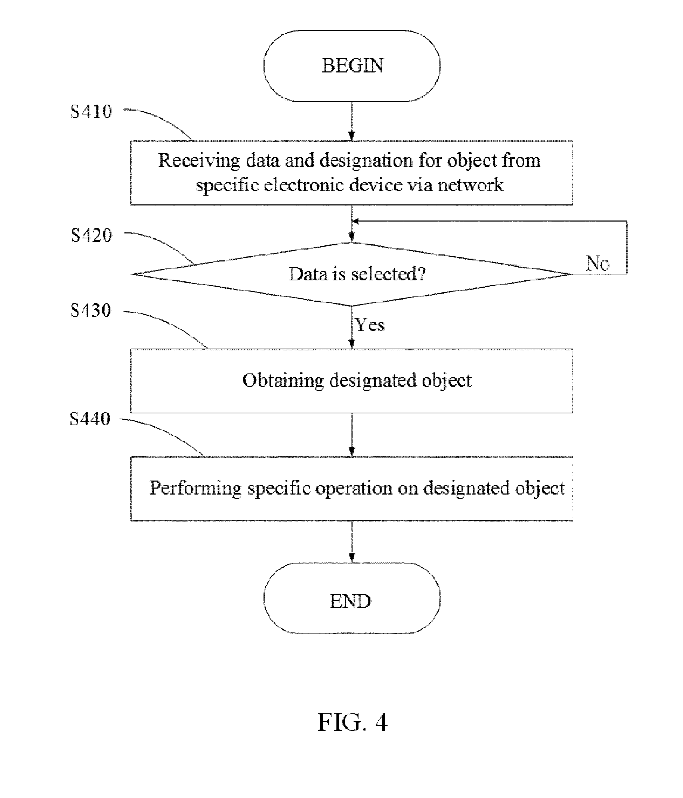

Fig. 4 is a flowchart of an embodiment of a data triggered method for object operation of the invention. The data triggered method for object operation can be used in an electronic device, such as a computer, or a portable device, such as a mobile phone, a smart phone, a PDA, a GPS, or a notebook.

In step S410, data and a designation for an object are received from a specific electronic device via a network, such as a wired network, a telecommunication network, and/or a wireless network such as Bluetooth or Wi-Fi network. It is understood that, in some embodiments, the data may be an audio, a text, and/or a video. Furthermore, in some embodiments, the object can be received from the specific electronic device via the network. In some embodiments, the object can be received from a server via the network. In some embodiments, the object can be built in the electronic device. It is noted that, in some embodiments, the object comprises a text, an image, and/or a sound effect. Then, in step S420, it is determined whether the data is selected. It is understood that, in some embodiments, the data is played when the data is selected. For example, when the data is an audio clip, the data is selected, the audio clip is played back by the electronic device. When the data is not selected (No in step S420), the procedure remains at step S420. When the data is selected (Yes in step S420), in step S430, a corresponding object is obtained according to the designation, and in step S440, a specific operation is performed on the designated object. It is understood that, in some embodiments, the object is displayed or played when the specific operation is performed. It is noted that, the display or playback corresponding to the object and the selection (display or playback) of the data will be simultaneously performed.

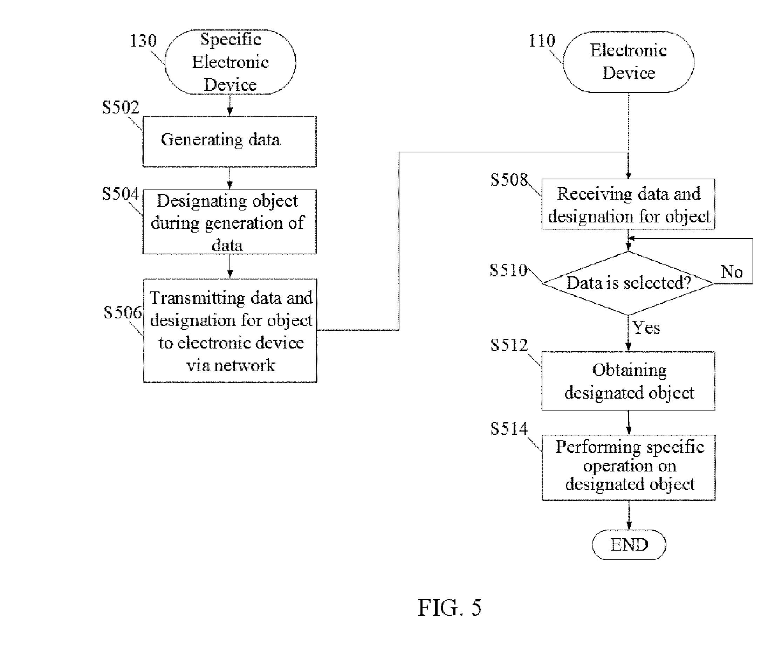

Fig. 5 is a flowchart of another embodiment of a data triggered method for object operation of the invention. The data triggered method for object operation can be used in an electronic device 110 and a specific electronic device 130. It is understood that, in some embodiments, the electronic device 110 and the specific electronic device 130 can respectively execute a network communication application, and the communications between the electronic device 110 and the specific electronic device 130 can be performed via a server providing a network communication service corresponding to the network communication application.

In step S502, the specific electronic device 130 generates data, and in step S504, an object is designated during the generation of the data. Similarly, in some embodiments, the data may be an audio clip, a text, and/or a video. In some embodiments, the object may be in the specific electronic device 130. In some embodiments, the object may be in the server. In some embodiments, the object may be built in the electronic device 110. For example, a user can use the specific electronic device 130 to input a paragraph of text (data), and designate a corresponding sound effect (object). In another example, a user can use the specific electronic device 130 to record an audio clip (data), and designate a corresponding animation (object) during the recording of the audio. Then, in step S506, the specific electronic device 130 transmits the generated data and the designation corresponding to the object to the electronic device 110 via a network, such as a wired network, a telecommunication network, and/or a wireless network such as Bluetooth or Wi-Fi network. In step S508, the electronic device 110 receives the data and the designation corresponding to the object from the specific electronic device 130 via the network. Then, in step S510, it is determined whether the data is selected. Similarly, in some embodiments, the data is played when the data is selected. When the data is not selected (No in step S510), the procedure remains at step S510. When the data is selected (Yes in step S510), in step S512, the corresponding object is obtained according to the designation, and in step S514, a specific operation is performed on the designated object. Similarly, in some embodiments, the object is displayed or played when the specific operation is performed. It is noted that, the display or playback corresponding to the object and the selection (display or playback) of the data will be simultaneously performed.

For example, a user A can use the specific electronic device 130 to input a paragraph of text, designate a corresponding sound effect, and transmit the text and the designation corresponding to the sound effect to the electronic device 110 via a network. After the text and the designation corresponding to the sound effect are received, the designated sound effect is played when a user B selects the text via the electronic device 110. In another example, a user A can use the specific electronic device 130 to record an audio, designate a corresponding animation during the recording of the audio, and transmit the audio clip and the designation corresponding to the animation to the electronic device 110 via a network. After the audio clip and the designation corresponding to the animation are received, the audio clip is played back and the designated animation is displayed and played when a user B selects the audio clip via the electronic device 110. It is noted that, the above sound effect and/or animation can be built in the electronic device 110 or received from the server or the specific electronic device 130 via a network.

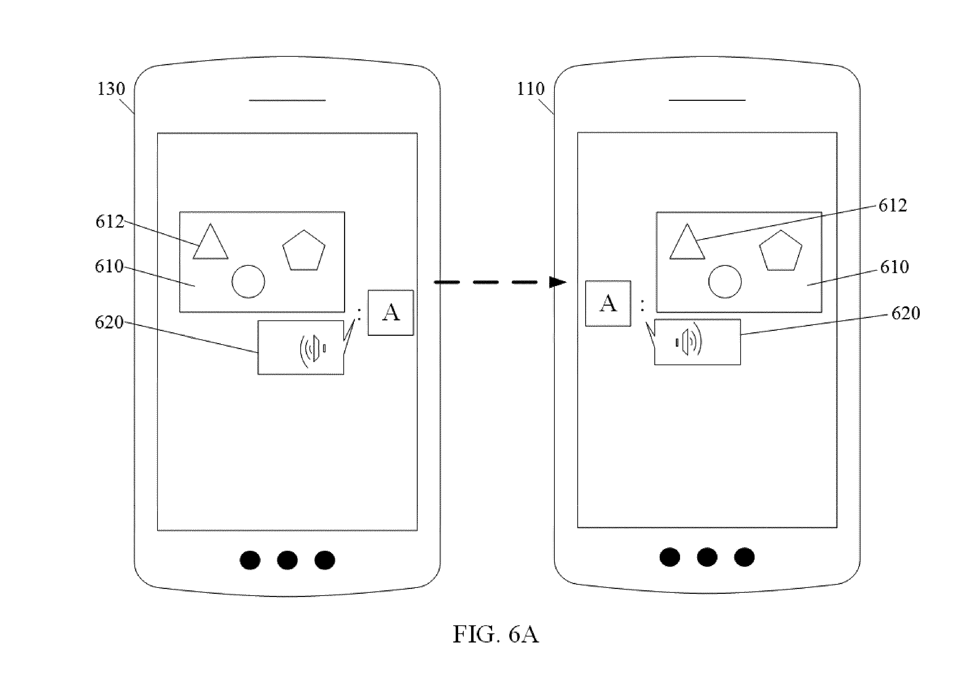

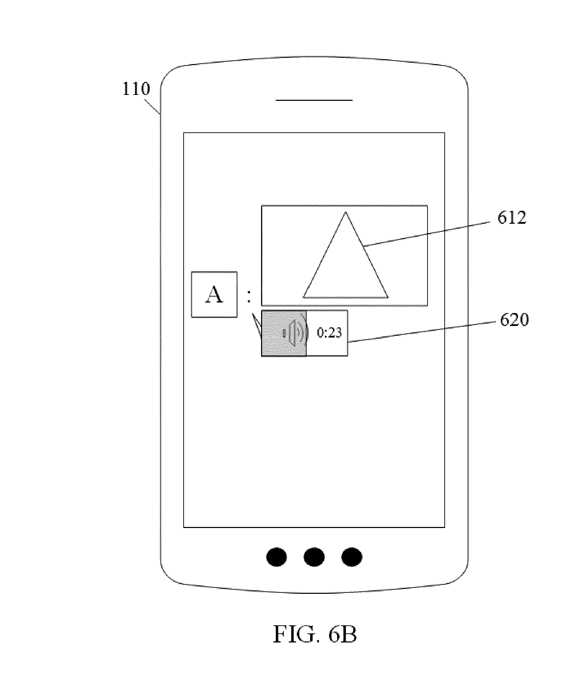

Figs. 6A and 6B are schematic diagrams illustrating an example of data-triggered object operation of the invention. In the example, a user A can use the specific electronic device 130 to attach an image 610, and record an audio clip 620, wherein an object 612 in the image 610 is designated when the audio clip 620 is recorded. The user A can transmit the image 610, the audio clip 620, and the designation relationship between the audio clip 620 and the object 612 to the electronic device 110 via a network, as shown in Fig. 6A. When a user B selects a representative icon corresponding to the audio clip 620, the audio clip 620 will be played back in the electronic device 110, and a specific operation is performed on the designated object 612. For example, the object 612 is magnified and displayed in the display unit, as shown in Fig. 6B. It is noted that, above object operation is only an example of the invention, and the present invention is not limited thereto. Any manner of object operation can be applied in the present invention.

Therefore, the data triggered methods and systems for object operation can allow users to generate and transmit data to another user, and trigger designated object in the device of the another user based on the data, thereby increasing the applicability and variety of communication between users.

Data triggered methods for object operation may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for executing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for executing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A data triggered method for object operation for use in an electronic device (110), comprising:
receiving data and a designation for an object from a specific electronic device (130) via a network (120);
receiving a selection corresponding to the data; and
in response to the selection of the data, obtaining the designated object, and performing a specific operation on the designated object.

2. The method of claim 1, further comprising receiving an image via the specific electronic device (130), wherein the designated object is a specific portion of the image, and the specific portion is magnified and displayed in a display unit when the specific operation is performed.

3. The method of claim 1 or 2, wherein the object comprises a text, an image, or a sound effect, and the object is displayed or played when the specific operation is performed.

4. The method of claim 1 or 2, wherein the object is built in the electronic device (110), the object comprises a text, an image, or a sound effect, and the object is displayed or played when the specific operation is performed.

5. The method of claim 1, 2, 3 or 4, further comprising generating the data by the specific electronic device (130), and designating the object during the generation of the data.

6. The method of claim 1, 2, 3, 4 or 5, further comprising executing a network communication application, wherein the data is received from the specific electronic device (130) via a server providing a network communication service corresponding to the network communication application.

7. The method of claim 1, 2, 3, 4, 5 or 6, wherein the data comprises an audio clip, a text, or a video.

8. The method of claim 7, wherein the data is played when the data is selected.

9. A data triggered system for object operation for use in an electronic device (200), comprising:
a network connecting unit (210); and
a processing unit (230) receiving data and a designation for an object from a specific electronic device via a network, receiving a selection corresponding to the data, and in response to the selection of the data, obtaining the designated object, and performing a specific operation on the designated object.

10. A machine-readable storage medium comprising a computer program, which, when executed, causes a device to perform a data triggered method for object operation, wherein the method comprises:
receiving data and a designation for an object from a specific electronic device (130) via a network (120);
receiving a selection corresponding to the data; and
in response to the selection of the data, obtaining the designated object, and performing a specific operation on the designated object.
